Europäisches Patentamt

European Patent Office

Office européen des brevets

(19)

(11) Publication number: **0 266 856**
**A1**

(12) **EUROPEAN PATENT APPLICATION**

(21) Application number: **87303774.1**

(22) Date of filing: **28.04.87**

(51) Int. Cl.⁴: **B60T 8/22** , B60T 13/74

(30) Priority: **26.09.86 GB 8623179**

(43) Date of publication of application:
**11.05.88 Bulletin 88/19**

(84) Designated Contracting States:
**CH DE ES FR IT LI**

(71) Applicant: **WESTINGHOUSE BRAKE AND SIGNAL COMPANY LIMITED**
**Pew Hill**
**Chippenham Wiltshire(GB)**

(72) Inventor: **Wickham, David John**
**2 Monks Way Cricketts Meadow London Road**
**Chippenham Wiltshire SN15 3TT(GB)**

(74) Representative: **MacFarlane, John Anthony Christopher et al**
**PAGE & CO Temple Gate House Temple Gate**
**Bristol BS1 6PL(GB)**

(54) Vehicle brake equipment.

(57) Vehicle brake equipment for a vehicle fitted with fluid suspension, the brake equipment including first braking-force generating means (4/10) or generating a braking force of a maximum value which is that required to effect maximum braking of the vehicle either when in its fully loaded condition or its empty condition, second fluid-operated braking means (50/51) having a fluid pressure responsive member (50) to which an applied fluid pressure generates a force which is subtractive from the braking force generated by the first braking-force generating means (4/10) when that first means is for generating a force of a maximum which is that required for the vehicle when in its fully-loaded condition or which constitutes an additional braking force when that first braking force generating means (4/10) is for generating a force of a maximum which is that required for the vehicle when in its empty condition, and valve means (60) which generates an output pressure which is derived from an input pressure which is that of the fluid suspension, the value means (60) modifying the input pressure such that the output pressure is variable in accordance with the value of the input pressure and ranges in such accordance between substantially atmospheric pressure and some high pressure dependant upon the pressure generated in the fluid suspension when the vehicle is fully loaded and said output pressure being applied to the pressure responsive member (50) of the second fluid-operated braking means (50/51).

FIG.1

1a.

# VEHICLE BRAKE EQUIPMENT

This invention relates to vehicle brake equipment and, in particular, to that for vehicles fitted with fluid suspension.

Vehicle braking systems which provide for an emergency braking facility the braking forces exerted by which is dependent upon the load of the vehicle are, of themselves, well known. However, such known systems require some form of proportioning arrangement - either pneumatic or electrical - and, in the case particularly of spring-applied emergency braking facilities, this leads to undesirable complexity. Clearly, in an emergency facility, the system should be as simple as possible to avoid any risk of failure of proper operation of the system in what is already necessarily an emergency.

To provide a vehicle braking system less complex than the known systems, the present invention provides vehicle brake equipment for a vehicle fitted with fluid suspension in which the brake equipment includes first braking force generating means for generating a braking force of a maximum value which is that required to effect maximum braking of the vehicle either when in its fully loaded condition or its empty condition, second fluid-operated braking means having a fluid pressure responsive member to which an applied fluid pressure generates a force which is subtractive from the braking force generated by the first braking-force generating means when that first means is for generating a force of a maximum which is that required for the vehicle when in its fully-loaded condition or which constitutes an additional braking force when that first braking force generating means is for generating a force of a maximum which is that required for the vehicle when in its empty condition, and valve means which generates an output pressure which is derived from an input pressure which is that of the fluid suspension, the valve means modifying the input pressure such that the output pressure is variable in accordance with the value of the input pressure and ranges in such accordance between substantially atmospheric pressure and some high pressure dependent upon the pressure generated in the fluid suspension when the vehicle is fully loaded and said output pressure being applied to the pressure responsive member of the second fluid-operated braking means.

The fluid suspension may be a closed-circuit pneumatic suspension in which case the valve means may include exhaust ports through which excess pressure in the valve means is exhausted, compression means being provided by which any exhausted pneumatic medium is compressed and fed back to the fluid suspension.

The first braking-force generating means may be a spring system and, in this case, the first means may be an electric actuator as claimed in any one of the Claims of our co-pending British Applicaton No. 8612061 (Case No. 64399).

The valve means may include a valve by which the input pressure is reduced by an amount which is the pressure in the fluid suspension when the vehicle is in its empty condition. The valve above referred to may be a first valve and the valve means has a second valve having an input side and an output side of which the input side is fed by the pressure in the fluid suspension and a pressure-responsive system which controls the operation of the second valve and has applied thereto the reduced fluid-suspension pressure, the output side of the valve being connected to the second fluid-operated braking means such that the reduced fluid-suspension pressure is applied to the fluid-pressure responsive member of the second fluid-operated braking means and to the pressure-responsive system of the second valve. With such valve means the pressure-responsive system of the second valve may be such that whilst the pressure fed from the fluid suspension to its input varies between lower and higher pressures in accordance with the empty/load condition of the vehicle and the pressure-responsive system has applied to it the reduced fluid-suspension pressure which varies between atmosphere and a value which is the difference between the empty condition of the vehicle and its loaded or partially-loaded condition, the pressure on the output side of the second valve varies between substantially atmospheric pressure and a pressure which is that of the fluid suspension when the vehicle is fully loaded.

One embodiment of the invention will now be described in greater detail, by way of example only with reference to the accompanying drawings of which:-

Fig. 1 shows a general arrangement drawing of the braking system.

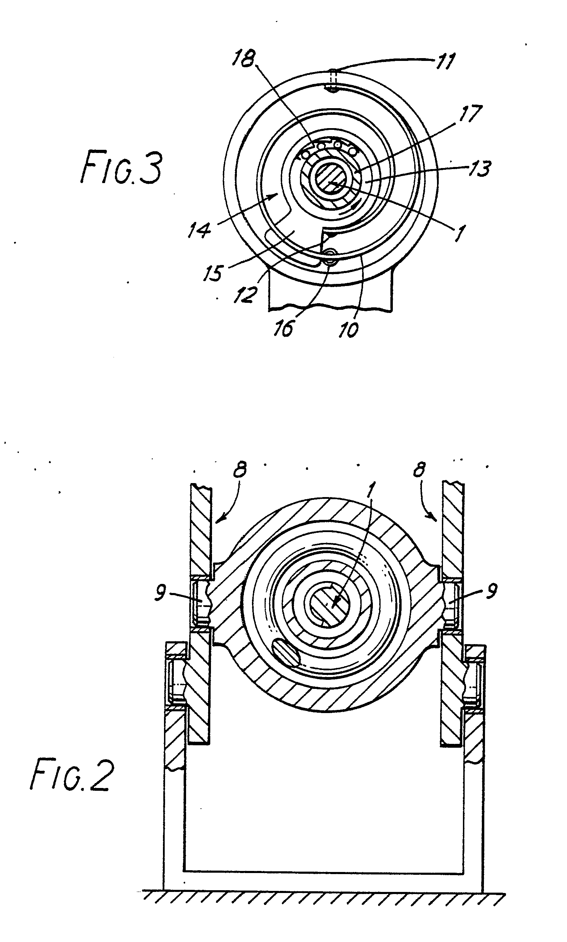

Fig. 2 shows a cross-section on the line 'A'-'A' of Fig. 1, and

Fig. 3 shows a cross-section on the line 'B'-'B' of Fig. 1.

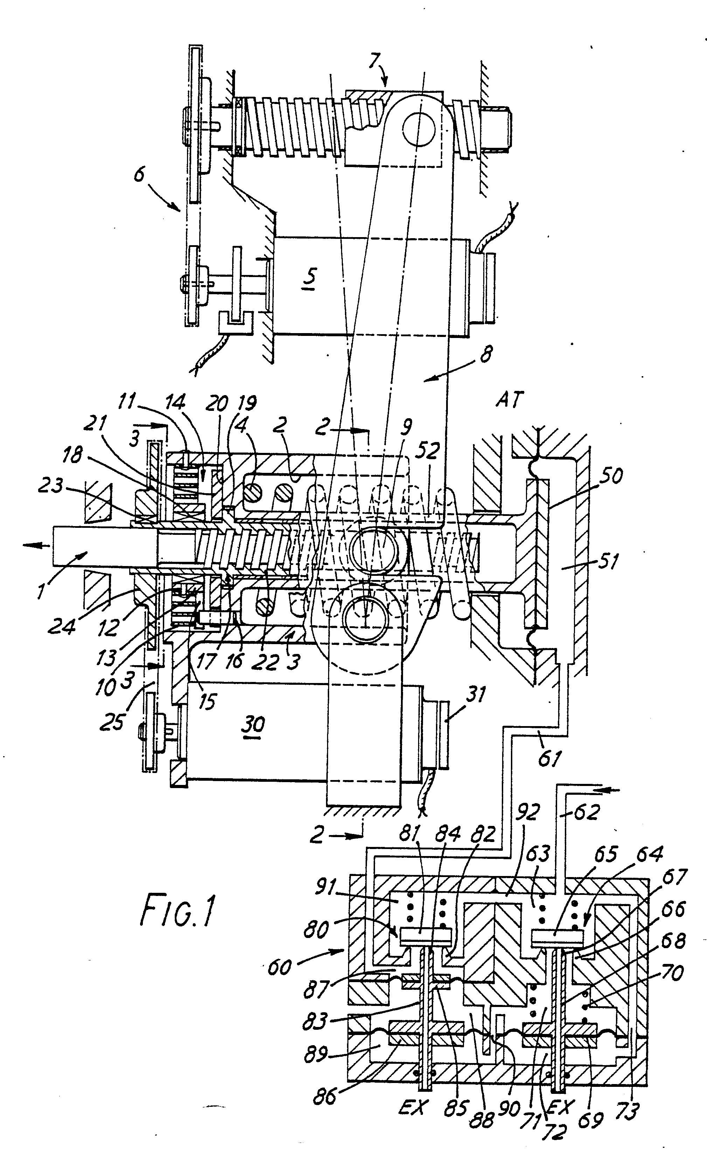

Referring to the drawings, the first braking-force generating means comprises an output member 1 movable from its first position as shown in Fig. 1 in the direction of arrow "A" to its second output position in which the brake blocks (not shown) engage the railway-vehicle wheel (also not shown).

Within the annular chamber 2 of a hollow-walled cylindrical housing 3 is a first power spring 4 arranged to be compressed to generate potential energy in the spring 4 by an electric motor 5 through gearing 6, a screw-and-nut combination 7, lever 8 and pin 9 secured to the housing 3.

A second clock-type spring 10 is located in the left-hand end (as viewed in the drawing) of the housing 3. The clock spring 10 is secured at 11 by one end of the spring to the housing 3 and at 12 by its other end to the central boss 13 of a spring housing 14. The housing 14 has a radial protrusion 15 (Fig. 3) from the boss 13 engageable by a pin 16 fixed in the housing 3. By this protrusion-and-pin 15/16 arrangement, the spring housing 14 can rotate relative to the housing 3 through only a limited angular distance - say, 300 degrees.

The spring-housing 14 is drivingly-engaged with tube 17 through a one-way clutch 18. The tube 17 is provided with a flange 19 by which the tube 17 is located axially within the housing 3 between a shoulder 20 in the housing 3 and a washer 21. The tube 17 is threaded at its right-hand end portion (as viewed in Fig. 1) threadedly to engage the threaded portion 22 on the output member 1. At its left-hand extremity (as viewed in Fig. 1) the tube 17 has keyed to it at 23 chain-gear wheel 24 arranged to be driven by chain 25 by a second electric motor 30 fitted with an electromagnetic brake 31.

It can thus be seen that the clock-spring 10 can be "wound-up" to generate in it potential force, by operation of the second electric motor 30 through chain 25, chain-gear wheel 24, tube 17, one-way clutch 18 and the spring housing 14.

In the "release" position of the above described actuator, the first power spring 4 will have been compressed by the motor 5. Previous operation of this motor 5 will have, through gearing 6, screw-and-nut combination 7 and lever 8 have moved the housing 3 to the right (as viewed in Fig. 1) thus compressing the power spring 4 between the end wall 40 and land 41. In this compressed condition of the power spring 4 in which potential energy will have been stored in the spring 4, the motor 4 will have been locked to hold the spring 4 compressed by energisation of the electromagnetic brake 42 of the motor 4.

Also, the clock-spring 10 will have been "wound up" by the motor 30. Previous operation of the motor 30 will have, through chain 25, chain-gear wheel 24, and one-way clutch 23 and will have rotated the spring housing 14 to "wind up" the spring 10. In this condition of the spring 10 in which potential energy will have been stored in the spring 10, the motor 30 will have been locked to hold the spring 10 "wound up" by energisation of the electromagnetic brake 42 of the motor 30.

As so far described, the apparatus operates as now to be described:

The brakes are "applied" by the following operations:-

Firstly, the electromagnetic brake 31 is released. This allows the "wound up" clock spring 10 to unwind rotating the output member 1 through the one-way clutch 23. By virtue of the threaded connection of the right-hand end (as viewed in Fig. 1) of tube 17 with the screw threaded portion 22 of the output member 1, the output member 1 will be driven to the left (as viewed in Fig. 1). Such movement of the output member 1 will normally be terminated when the brakes are engaged - i.e. when the output member is in its second force-exerting position. However, should there be excessive slack in the brakes, the output member 1 will not have reached its second position when the spring 10 has fully unwound. When this condition is detected, the motor 30 is energised to rotate in the opposite direction in which it rotates to "wind up" the spring 10. Such operation of the motor 30, through gear chain 25, chain-gear wheel 24, tube 17 and thread 22 will drive the output member 1 still further to the left (the one-way clutch 18 "freewheeling") until further leftward movement of the output member 1 is finally halted by its reaching its second "brakes-engaged" position.

When the output member 1 is detected as being in its second force-exerting position - i.e. its "brakes-engaged" position - the electromagnetic clutch 42 of the first electric motor 5 will be released. This will free the power spring 4 to expand exerting an output force on the output member 1. Expansion of the power spring 4 will also rotate the motor 5 backwards by virtue of the expansion of the spring 4 acting through the pivot 9, lever 8, nut-and-screw combination 7 and gearing 6. Such rotation of the motor 5 can be measured by an encoder 50 and this measurement will be indicative of the output force being generated on the output member 1 by the spring 4. This measurement can be compared with the degree of rotation of the motor 5 equating with the required value of the output force and when rotation of the motor 5 indicates that this required value has been reached, the motor 5 can be locked against further rotation by its electromagnetic brake 42 holding the output force at the required value.

The brakes are subsequently released by sequential re-energisation of motors 5 and 30 firstly to re-compress and hold re-compressed the power spring 4 and thereafter to re-wind and hold re-wound the clock-spring 10.

It will be seen that the protrusion-and-pin construction 15/16 limiting as it does the extent of wind-back of the output member 1 will ensure a predetermined degree of movement back of the output member 1 to its first position and, therefore, a predetermined degree of "clearance" of the brakes. Thus, this construction provides a "slack adjustment" function.

As so far described the equipment is that which is described and claimed in our co-pending British Application No. 8612061 (Case No. 64399) and this equipment constitutes first braking-force generating means.

There is additionally provided second braking-force generating means which comprises a fluid-pressure responsive member 50 to one side of which in chamber 51 can be applied fluid pressure. The diaphragm 50 is operatively connected to a central tubular extension 52 of the cylindrical housing 3. Thus it can be seen that any pressurisation of the chamber 51 will generate on the tubular extension 52 a force which will be transmitted through the flange 19 and the threaded portion 22 of the tube 17 to the output member 1 there to constitute a braking force additive to that which can be generated by the power spring 4.

The chamber 51 is connected to valve means 60 via pipe 61. The valve means 60 has an input pipe 62 which is connected into the fluid suspension (not shown) of the vehicle. The pipe 62 opens into the valve means 60 on the input side (chamber 63) of a first valve 64 comprised by a spring-loaded valve closure element 65 which seats on an outer annular valve seat 66 and is engaged by an inner valve seat 67 constituted by the upper end of tube 68 the lower end of which is open to exhaust at a port EX. The tube 68 constitutes a valve stem which is carried by a diaphragm 69 loaded on its upper side by a spring 70 in chamber 71. The lower side of the diaphragm 69 constitutes one wall of a chamber 72 connected to the chamber 63 via conduit 73.

This first valve 64 operates as follows:-

Whatever may be the pressure in the fluid suspension is applied to both chamber 63 and chamber 72 via conduit 73. The pressure in the fluid suspension will vary between, say, 50 lbs/sq. in. in the "empty" condition of the vehicle and, say, 80 lbs/sq. in. in the "fully-loaded" condition of the vehicle. The downward force exerted on the diaphragm 69 by the spring 70 is such as to equate with the upward force exerted on that diaphragm due to the pressurisation of the chamber 72 in the "empty" condition of the vehicle - as exemplified, 50 lbs/sq. in. Thus, without the necessity for further description, the pressure which will appear in chamber 71 will be the pressure difference (if any) between the pressure actually in the fluid suspension and the pressure which will be in the fluid suspension when the vehicle is "empty". Hence, with the exemplified fluid suspension pressures, the pressure in the chamber 71 will range between 0 to 30 lbs/sq. in as the fluid suspension pressure ranges between 50 to 80 lbs/sq. in.

The valve means 60 also has a second valve 80 which has its own spring-loaded valve closure element 81, valve seat 82 and hollow valve stem 83 which opens to exhaust at its lower end at a port EX and is engageable with the element 81 at its upper end there to constitute an inner valve seat 84. In the case of this valve stem 83, it is carried by a pair of diaphragms 85 and 86 (of which the diaphragm 86 is of larger area) which collectively partly define three chambers 87, 88 and 89. The chamber 87 is connected to the pipe 61 leading to the chamber 51, the chamber 88 is connected to atmosphere and the chamber 89 is connected via conduit 90 to chamber 71 of the first valve 64.

The chamber 91 on the input side of the second valve 80 is connected via conduit 92 to the chamber 63 on the input side of the first valve 64. Hence, the chamber 91 will equally be fed by the pressure pertaining in the fluid suspension.

Without the necessity for further description, it will be seen that the second valve 80 acts as a step-up relay valve. The pressure in the chamber 89 (which will range, as exemplified, from 0 to 30 lbs/sq. in) will be linearly increased in chamber 87 to as an output pressure, with the exemplified pressures, 0 to 80 lbs/sq. in., the fluid suspension providing the source for that output pressure. This output pressure will be related to the loading of the vehicle and will, over pipe 61, be applied to chamber 51 of the second braking-force generating means.

Overall, the equipment above described operates as follows:-

The spring 4 of the first braking-force generating means is designed such that it can exert a braking force of a maximum value which is required to effect maximum braking of the vehicle when in its "empty" condition. In this condition of the vehicle, the pressure in the chamber 87 of the second valve 80 of the valve means 60 will be at atmosphere. Hence, the chamber 51 will be at atmospheric pressure and no force will be generated by the diaphragm 50 on the output member 1. In the event, therefore, of an emergency operation of the brake system, only the spring 4 will generate a braking force on the output member 1 and this generated force will be that appropriate for the vehicle in its "empty" condition.

If however, the vehicle is loaded (either partially or fully) there will be in chamber 87 a pressure ranging, as exemplified, between 0 to 80 lbs/sq. in. the actual pressure corresponding to the degree of loading of the vehicle. This pressure will be applied over pipe 61 to chamber 51 of the second braking-force generating means and will thus cause a braking force to be generated on the tubular extension 52 which corresponds to the difference of weight of the vehicle in its (partially-or fully-, as the case may be) "loaded" condition over that of its "empty" condition. Hence, that force is indicative of the load in the vehicle.

In an emergency brake operation, therefore, there will be additive to the braking force exerted by the spring 4 (which is a force appropriate to the vehicle in its "empty" condition) a further braking force generated by the diaphragm 50 (which is a force appropriate to the "load" of the vehicle). Hence, the total braking force exerted by the output member 1 will be that appropriate for maximum braking of the vehicle in accordance with its degree of loading.

For "service" braking (as distinct from "emergency" braking), there is provided (but not shown) the conventional control equipment to control the braking force generated on the output member in accordance with a variety of factors; e.g. the degree of braking required, the load of the vehicle, the degree of effectiveness of any dynamic braking facility on the vehicle, etc. Thus, any additive braking force generated by the second braking-force generating means will be compensated for in the control of the motor 5 which in turn controls the braking force allowed to be generated by the spring 4.

In the above described embodiment, it has been described that the maximum force which can be generated by the spring 4 is that appropriate to an "empty" vehicle and that the force generated by the diaphragm 50 is appropriate to that of the load on the vehicle and is additive to that generated by the spring 4. However, a converse arrangement could equally well be used. That is to say, the spring 4 would be such as to be able to generate a braking force appropriate to a "fully-loaded" condition of the vehicle and, in this case, the second braking-force generating means would be constructed and arranged such as to be subtractive from the braking force generated by spring 4. In this case, the valve means 60 would be such as to generate an output pressure indicative not of the load of the vehicle over and above its "empty" condition, but to generate an output pressure indicative of the amount by which the actual loading of the vehicle falls below its maximum loading.

Again, the invention has been described above with the first braking-force generating means being of a particular construction. Means of other construction could equally well be used. For example, the spring 4 could be releasable by a pneumatic actuator instead of the electric motor 5. Indeed, the braking force could be derived from a fluid-operated actuator instead of from the spring 4.

If the fluid suspension is the form of a closed fluid system, the exhausts from the first and second valves 64 and 80 could be delivered to compression means by which the exhausted fluid could be fed back into the fluid suspension.

## Claims

1. Vehicle brake equipment for a vehicle fitted with fluid suspension, the brake equipment including first braking-force generating means (4/10) for generating a braking force of a maximum value which is that required to effect maximum braking of the vehicle either when in its fully loaded condition or its empty condition, second fluid-operated braking means a (50/51) having a fluid pressure responsive member (50) to which an applied fluid pressure generates a force which is subtractive from the braking force generated by the first braking-force generating means (4/10) when that first means is for generating a force of a maximum which is that required for the vehicle when in its fully-loaded condition or which constitutes an additional braking force when that first braking force generating means (4/10) is for generating a force of a maximum which is that required for the vehicle when in its empty condition, and valve means (60) which generates an output pressure which is derived from an input pressure which is that of the fluid suspension, the valve means (60) modifying the input pressure such that the output pressure is variable in accordance with the value of the input pressure and ranges in such accordance between substantially atmospheric pressure and some high pressure dependent upon the pressure generated in the fluid suspension when the vehicle is fully loaded and said output pressure being applied to the pressure responsive member (50) of the second fluid-operated braking means (50/51).

2. An equipment as claimed in Claim 1, wherein the fluid suspension is a closed-circuit pneumatic suspension.

3. An equipment as claimed in Claim 2, wherein the valve means (60) includes exhaust ports (EX) through which excess pressure in the valve means is exhausted, compression means being provided by which any exhausted pneumatic medium is compressed and fed back to the fluid suspension.

4. An equipment as claimed in any one of the preceding Claims, wherein the first braking-force generating means is a spring system (4,10).

5. An equipment as claimed in Claim 4, wherein the first braking-force generating means is an electric actuator as claimed in any one of the Claims of our co-pending. British Application No. 8612061 (Case No. 64399).

6. An equipment as claimed in any one of the preceding Claims, wherein the valve means (60) includes a valve (64) by which the input pressure is reduced by an amount which is the pressure in the fluid suspension when the vehicle is in its empty condition.

7. An equipment as claimed in Claim 6, wherein said valve (64) is a first valve and the valve means has a second valve (80) having an input side and an output side of which the input side is fed by the pressure in the fluid suspension and a pressure-responsive system (85-89) which controls the operation of the second valve and has applied thereto the reduced fluid-suspension pressure, the output side of the second valve (80) being connected to the second fluid-operated braking means (50/51) such that the reduced fluid-suspension pressure is applied to the fluid-pressure responsive member (50) of the second fluid-operated braking means (50/51) and to the pressure-responsive system of the second valve (80).

8. An equipment as claimed in Claim 7, wherein the pressure-responsive system (85-89) of the second valve (80) is such that whilst the pressure fed from the fluid suspension to its input varies between lower and higher pressures in accordance with the empty/load condition of the vehicle and the pressure-responsive system (85-89) has applied to it the reduced fluid-suspension pressure which varies between atmosphere and a value which is the difference between the empty condition of the vehicle and its loaded or partially-loaded condition, the pressure on the output side of the second valve (80) varies between substantially atmospheric pressure and a pressure which is that of the fluid suspension when the vehicle is fully loaded.

FIG.1

0 266 856

FIG.3

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| E | EP-A-0 246 770 (WESTINGHOUSE BRAKE AND SIGNAL)<br>* whole document * | 1,4,5 | B 60 T 8/22<br>B 60 T 13/74 |
| E | EP-A-0 247 733 (WESTINGHOUSE BRAKE AND SIGNAL)<br>* whole doucment * | 1,4,5 | |
| A | EP-A-0 125 870 (WESTINGHOUSE BRAKE AND SIGNAL)<br>* figures 1-3 * | 1,4 | |
| A | DE-A-2 756 405 (BOSCH) | | |
| A | DE-A-2 754 205 (BOSCH) | | |

TECHNICAL FIELDS
SEARCHED (Int. Cl.4)

B 60 T 8/00
B 60 T 13/00

The present search report has been drawn up for all claims

| Place of search | Date of completion of the search | Examiner |
|---|---|---|
| BERLIN | 04-02-1988 | LUDWIG H J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
 
& : member of the same patent family, corresponding
document

EPO FORM 1503 03.82 (P0401)